# EUROPÄISCHE PATENTANMELDUNG

(11) **EP 4 628 903 A1**
(43) Veröffentlichungstag der Anmeldung: **08.10.2025**
(21) Anmeldenummer: 25163594.2
(22) Anmeldetag: 13.03.2025
(51) Int. Cl.: G01P 15/02, G01P 15/08, G01V 7/02, B81B 3/00, B81C 1/00

(54) **MECHANISCHER RESONATOR, VERFAHREN ZU DESSEN HERSTELLUNG UND DESSEN VERWENDUNG**

(30) Priorität: 15.03.2024 DE 102024202464
(71) Anmelder: Fraunhofer-Gesellschaft zur Förderung der angewandten Forschung e.V., 80686 München (DE); Max-Planck-Gesellschaft zur Förderung der Wissenschaften E. V., 10117 Berlin (DE)
(72) Erfinder: BIRCKIGT, Pascal, 07745 Jena (DE); RISSE, Stefan, 07745 Jena (DE); LEIBELING, Gilbert, 07745 Jena (DE); CARTER, Jonathan, 30167 Hannover (DE)
(74) Vertreter: Pfenning, Meinig & Partner mbB

(57) **Zusammenfassung**

Die vorliegende Erfindung betrifft einen mechanischen Resonator für Beschleunigungs- und Lagesensoren, der eine kompakte Bauform aufweist und gleichzeitig eine niedrige Eigenfrequenz bei hohem Gütefaktor aufweist. Ebenso betrifft die Erfindung ein Verfahren zur Herstellung dieses mechanischen Resonators. Der mechanische Resonator findet beispielsweise Verwendung in Gravitationswellendetektoren, Atom-Interferometern und EUV-Lithographieanlagen. Die Position des Prüfkörpers des mechanischen Resonators kann dann später interferometrisch mit einem optischen System ausgelesen werden.

## Beschreibung

Die vorliegende Erfindung betrifft einen mechanischen Resonator für Beschleunigungs- und Lagesensoren, der eine kompakte Bauform aufweist und gleichzeitig eine niedrige Eigenfrequenz bei hohem Gütefaktor aufweist. Ebenso betrifft die Erfindung ein Verfahren zur Herstellung dieses mechanischen Resonators. Der mechanische Resonator findet beispielsweise Verwendung in Gravitationswellendetektoren, Atom-Interferometern und EUV-Lithographieanlagen. Die Position des Prüfkörpers des mechanischen Resonators kann dann später interferometrisch mit einem optischen System ausgelesen werden.

Beschleunigungs- und Lagesensoren finden Anwendung in vielen technischen Messsystemen. In manchen Fällen ist der Bauraum in den Messystemen begrenzt, so dass der Resonator, d.h. der Teil des Sensors, der die externe mechanische Störung erfasst, eine kompakte Geometrie haben muss. Stand der Technik ist, dass kompakte Resonatoren einen geringen Gütefaktor, d.h. eine geringe Empfindlichkeit, und/oder eine hohe Eigenfrequenz haben, d.h. sie können nur mit einer schlechten Empfindlichkeit den niedrigfrequenten Anteil externer mechanischer Störungen erfassen.

Es gibt bisher keinen Resonator, der kompakt ist, eine niedrige Eigenfrequenz hat und einen hohen Gütefaktor aufweist.

In Graviationswellendetektoren ist die genaue Messung niederfrequenter seismischer Störungen erforderlich. Dazu werden aktuell kommerzielle Seismometer wie *Sercel L-4C* oder *Geotech GS-13* eingesetzt (S. Cooper, C. Collins, L. Prokhorov et al., 2022: Interferometric sensing of a commercial geophone. Class. Quantum Grav. 39(7), https://doi.org/10.1088/1361-6382/ac595c). Diese Seismometer haben eine Eigenfrequenz von 1 Hz und sind mehrere Kilogramm schwer und entsprechend groß. Der Nachteil besteht darin, dass die Messung aufgrund des begrenzten Bauraums dann nicht direkt in der Nähe der großen Interferometerspiegel erfolgen kann.

Atom-Interferometer nutzen quantenmechanische Welleneigenschaften von Atomen, um genauste Messungen der fundamentalen Naturkonstanten zu machen, zum Beispiel der Gravitationskonstante oder der Feinstrukturkonstante. In aktuellen Atom-Interferometern werden kompakte monolithische Glas-Resonatoren eingesetzt. Diese kommen der vorliegenden Erfindung am nächsten (L. L. RICHARDSON, A. RAJAGOPALAN, H. ALBERS et al., 2020: Optomechanical resonator-enhanced atom interferometry. Commun. Phys. 3(208), https://doi.org/10.1038/s42005-020-00473-4). Der Nachteil besteht darin, dass deren Eigenfrequenz relativ hoch ist (*f₀* = 678 Hz), weil die Geometrie der Resonatoren baubedingt zu einer hohen Steifigkeit führt, und der Gütefaktor niedrig ist (*Q* = 630).

In EUV-Lithographie-Anlagen werden aktive Vibrations-Isolations-Systeme eingesetzt. Sie arbeiten mit Aktoren und Sensoren, um eintreffende Schwingungen zu messen, kontrollieren und zu isolieren. Aktuell werden kapazitative und piezoelektrische Sensoren eingesetzt, die aber vor allem für höhere Frequenzen empfindlich sind (S. Spanjer, W. Hakvoort, 2021: Optimal Active Vibration Isolation Systems for Multiple Noise Sources. European Control Conference 2021. In Proc. IEEE, p. 2473, https://doi.org/10.23919/ECC54610.2021. 9654949). Der Nachteil besteht einerseits darin, dass umliegende elektromagnetische Felder und auch zu dem Sensor dazugehörige Kabel das Auslesen der Resonatoren verfälschen können, und andererseits darin, dass niederfrequente seismische Störungen aufgrund der fehlenden Empfindlichkeit der Sensoren in diesem Frequenzbereich nicht komplett isoliert werden können.

Ausgehend hiervon war es Aufgabe der vorliegenden Erfindung, einen mechanischen Resonator bereitzustellen, der die beschriebenen Nachteile des Standes der Technik überwindet und eine kompakte Bauform und eine niedrige Eigenfrequenz bei gleichzeitiger hohem Gütefaktor aufweist.

Diese Aufgabe wird durch das Verfahren zur Herstellung eines mechanischen Resonators für Beschleunigungs- und Lagesensoren mit den Merkmalen des Anspruchs 1, den mechanischen Resonator mit den Merkmalen des Anspruchs 13 und die Verwendung gemäß Anspruch 15 gelöst. Die weiteren abhängigen Ansprüche führen vorteilhafte Weiterbildungen auf.

Erfindungsgemäß wird ein Verfahren zur Herstellung eines mechanischen Resonators für Beschleunigungs- und Lagesensoren bereitgestellt, das folgende Schritte aufweist:
a) Bereitstellung von einem ersten Substrat und zwei Decksubstraten, jeweils enthaltend oder bestehend aus einem Material ausgewählt aus der Gruppe bestehend aus Glas, Glaskeramik, Saphir, Silicium, Siliciumcarbid oder Kombinationen hiervon,
b) Polieren des Substrats und der Decksubstrate mittels chemischmechanischem Polieren (CMP), Pechpolieren oder Ionenstrahlpolieren, wobei das erste Substrat beidseitig und die Decksubstrate einseitig, also die jeweiligen Kontaktflächen der Substrate, poliert werden,
c) Herstellung eines Prüfkörpers und eines Rahmens aus dem ersten Substrat mittels Zerspanen oder Laserbearbeitung,
d) Zumindest bereichsweise Beschichtung des Prüfkörpers mit einer reflektierenden Beschichtung mittels physikalischer Gasphasenabscheidung (PVD) und/oder Atomlagenabscheidung (ALD),
e) Erzeugung einer Biegebalken-Geometrie auf den Decksubstraten mittels Laser-Ablation und/oder chemischem Ätzen, wobei in den Bereichen außerhalb der Biegebalken-Geometrie auf den zwei Decksubstraten bereichsweise ein Materialabtrag erfolgt und ein die Biegebalken-Geometrie umschließender Graben erzeugt wird,
f) Erzeugung von Löchern in den Decksubstraten mittels Zerspanen oder Laserbearbeitung zur relativen Ausrichtung der Substrate zueinander,
g) Verbindung von dem Rahmen und dem Prüfkörper mit den Biegebalken der Decksubstrate mittels Wafer-Bonden zur Erzeugung eines monolithischen Resonators, wobei zunächst der Rahmen und der Prüfkörper mit dem ersten Decksubstrat und anschließend mit dem zweiten Decksubstrat verbunden wird,
h) Befüllen der Löcher in den Substraten mit einem chemisch löslichen Kitt und anschließendes Aushärten des Kitts,
i) Rückdünnung der Decksubstrate mittels Schleifen und anschließendem Polieren,
j) Entfernung des Kitts durch Auflösung mit einer Säure, einer Lauge oder einem Lösungsmittel,
k) Lösen des Materials der Decksubstrate (5) vom Resonator (8), das nicht Teil der Biegebalken ist und
l) Reinigung des Resonators.

Die vorliegende Erfindung stellt somit ein Verfahren zur Herstellung eines mechanischen, monolithischen Resonators bereit, der eine kompakte Bauform, eine niedrige Eigenfrequenz und einen hohen Gütefaktor hat.

Das Konzept der vorliegenden Erfindung beruht darauf, dass ein monolithisches Bauteil hergestellt wird, das sehr lange, dünne Biegebalken mit einer hohen spezifischen Steifigkeit hat. Die Biegebalken ermöglichen die niedrige Eigenfrequenz bei einer trotzdem kompakten Bauform. Der Gütefaktor wird dabei entscheidend durch die Wahl des Materials und durch die Fügemethode beeinflusst.

Als Material wird dabei ein Material ausgewählt aus der Gruppe bestehend aus Glas, Glaskeramik, Saphir, Silicium, Siliciumcarbid oder Kombinationen hiervon eingesetzt, welche eine hohe spezifische Steifigkeit und sich elastisch verformen. Zudem kann bei diesen Materialien eine sehr geringe Oberflächenrauheit (Sq-Rauheit) eingestellt werden. Dies sorgt für eine maximale Verringerung interner mechanischer Verluste bei Bewegung der Biegebalken.

Da jede Fügeverbindung, die aus Zwischenschichten besteht, zum Beispiel Klebstoff oder Lot, zu mechanischen Verlusten bei Bewegung der Biegebalken führt, beruht die erfindungsgemäße Lösung darauf ein monolithisches Design zu wählen. Dies wird realisiert durch Wafer-Bonden. Das Wafer-Bonden ist ein Verfahren aus der Halbleiter-Technologie, welches hier zur Realisierung dauerhaft stabiler, zwischenschichtfreier Fügeverbindungen von Kieselglasoberflächen Anwendung findet. Bei diesem Verfahren werden die Oberflächen gereinigt, chemisch und/oder physikalisch aktiviert und dann in Kontakt gebracht, und schließlich einer Temperaturbehandlung unterzogen. Das Ergebnis ist eine kovalente Bindung zwischen den Oberflächen, so dass die ursprünglichen zwei Bauteile nun als eines betrachtet werden können.

Es ist bevorzugt, dass das Glas ein Silikatglas, insbesondere ein Quarzglas ist.

Vorzugsweise erfolgt das Polieren in Schritt b) bis zu einer Oberflächenrauheit, gemessen als Sq-Rauheit auf einer Messfläche von 10 x 10 µm², von maximal 1 nm, bevorzugt von maximal 0,5 nm und besonders von 0,1 bis 0,3 nm. Die Sq-Rauheit ist der quadratische Mittelwert über die Fläche.

Eine bevorzugte Ausführungsform des erfindungsgemäßen Verfahrens sieht vor, dass die Beschichtung in Schritt d) mit einem Material ausgewählt aus der Gruppe bestehend aus Gold, Silber und Aluminium durchgeführt wird. Die Schichtdicke der Beschichtung liegt bevorzugt im Bereich von 50 bis 500 nm, besonders bevorzugt von 150 bis 200 nm. Alternativ ist es auch möglich, dass die Beschichtung eine dielektrische Schicht aus Silcium, Siliciumdioxid und/oder Tantalpentoxid ist, wobei die Schichtdicke bevorzugt im Bereich von 0,2 bis 5 µm, besonders bevorzugt von 1 bis 2 µm liegt ist,

Der Biegebalken weist vorzugsweise eine Dicke im Bereich von 40 bis 300 µm, besonders bevorzugt von 80 bis 100 µm auf. Dabei ist es bevorzugt, dass der die Biegebalken-Geometrie umschließende Graben vorzugsweise eine Tiefe von d+20 bis d+150 µm, bevorzugt von d+30 bis d+70 µm, gemessen senkrecht zur Substratoberfläche, besitzt, wobei d die Dicke der Biegebalken ist.

Es ist weiter bevorzugt, dass in Schritt e) der Materialabtrag von 5 bis 40 µm des Materials beträgt. Dies bezieht sich auf die Materialabtragsteife senkrecht zur Substratoberfläche.

Es ist bevorzugt, dass beim Wafer-Bonden in Schritt g) ein plasmaaktiviertes Bonden (PAB) mit einer anschließenden Temperaturbehandlung bei einer Temperatur im Bereich von 80 °C bis 450 °C, bevorzugt 200 bis 250 °C erfolgt.

Vorzugsweise ist der Kitt in Schritt h) ausgewählt aus der Gruppe bestehend aus Epoxidharzen, Ketonformaldehydharzen, Polythiolen oder Kombinationen hiervon.

Die Rückdünnung in Schritt i) mit einem Polierschritt abgeschlossen wird, so dass eine Oberflächenrauheit, gemessen als Sq-Rauheit auf einer Messfläche von 10 x 10 µm², von maximal 2 nm, bevorzugt von maximal 1 nm und besonderes von 0,3 bis 0,7 nm erzeugt wird.

Es ist ferner bevorzugt, dass die Auflösung des Kitts in Schritt j) mittels einer Säure, einer Lauge oder einem Lösungsmittel ausgewählt aus der Gruppe bestehend aus Aceton, Toluol, Methylenchlorid oder Mischungen hiervon erfolgt.

Eine bevorzugte Ausführungsform sieht vor, dass für die Reinigung des Resonators in Schritt k) mindestens einer der folgenden Schritte durchgeführt wird:
- Lagerung in oder manuelle Reinigung mit einer Säure, einer Lauge oder einem Lösungsmittel ausgewählt aus der Gruppe bestehend aus Aceton, Toluol, Methylenchlorid oder Mischungen hiervon.
- Megaschallbehandlung des Resonators mit deionisiertem Wasser.

Erfindungsgemäß wird weiterhin ein mechanischer Resonator für Beschleunigungs- und Lagesensoren bereitgestellt, der einen von einem Rahmen umgebenen Prüfkörper aus einem ersten Substrat enthält, wobei der Rahmen und der Prüfkörper front- und rückseitig mit einem Decksubstrat in Form von Biegebalken monolithisch verbunden sind. Dieser Resonator ist nach dem zuvor beschriebenen Verfahren herstellbar.

Vorzugsweise weist der Resonator mindestens eine der folgenden Eigenschaften auf:
- eine Prüfkörper-Masse im Bereich von 1 bis 20 g, bevorzugt 2 bis 5 g,
- eine Eigenfrequenz bis 20 Hz, bevorzugt von 0,1 bis 15 Hz,
- einen Gütefaktor von mindestens 10000, bevorzugt von 100000 bis 1000000.

Verwendung findet der mechanischen Resonators nach einem der Ansprüche 13 bis 15 in Gravitationswellendetektoren, Atom-Interferometern, EUV-Lithographieanlagen, Röntgenstrahl-Lithographieanlagen oder Navigationsgeräten.

Anhand des nachfolgenden Beispiels und der Figuren soll der erfindungsgemäße Gegenstand näher erläutert werden, ohne diesen auf die hier gezeigten spezifischen Ausführungsformen einschränken zu wollen.
- Fig. 1: zeigt in einer perspektivischen Darstellung den Rahmen eines erfindungsgemäßen Resonators
- Fig.2: zeigt in einer perspektivischen Darstellung den Prüfkörper eines erfindungsgemäßen Resonators
- Fig. 3: zeigt in einer Draufsicht ein Decksubstrat eines erfindungsgemäßen Resonators
- Fig. 4: zeigt in einer perspektivischen Darstellung einen erfindungsgemäßen Resonator

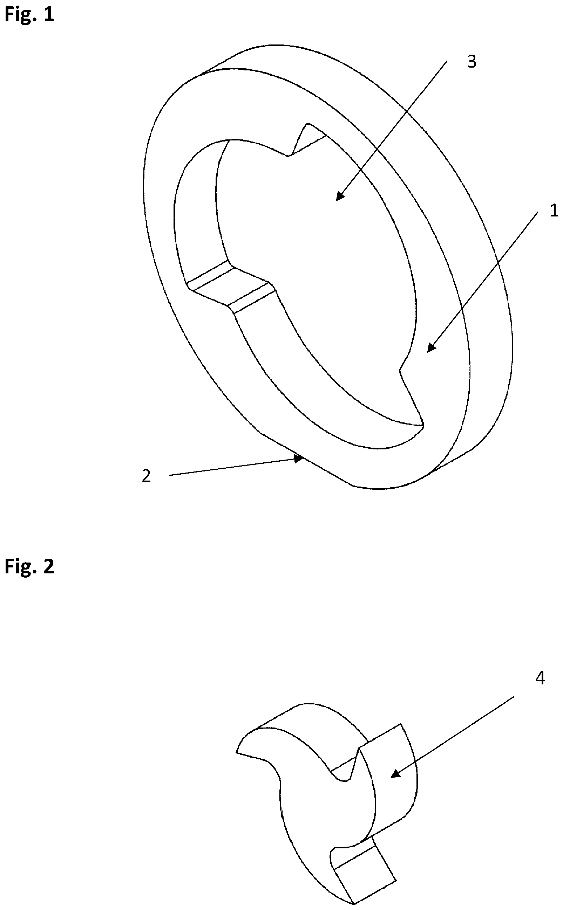

In Fig. 1 ist ein Rahmen 1 zu sehen, der mittels Zerspanen aus dem ersten Substrat erstellt wurde. An der unteren, äußeren Seite befindet sich eine flache Fläche 2, die zur Installation des finalen mechanischen Resonators in einem optischen System dient. Aufgrund der Tatsache, dass als Ausgangs-Halbzeug ein rundes Substrat verwendet wurde, musste bis auf die flache Fläche 2 nur der innere Bereich 3 herausgearbeitet werden. Die Form der inneren Fläche weist eine drei-zählige Drehsymmetrie auf. Die hervorstehenden Bereiche auf den Oberflächen sind Kontaktflächen mit den Biegebalken.

In Fig. 2 ist ein Prüfkörper 4 zu sehen, der mittels Zerspanen ebenfalls aus dem ersten Substrat erstellt wurde. Er weist ebenfalls eine drei-zählige Drehsymmetrie auf. Die hervorstehenden Bereiche auf den Oberflächen sind Kontaktflächen mit den Biegebalken. In die Mitte der einen Oberfläche wird in einem späteren Schritt eine reflektierende Beschichtung aufgetragen.

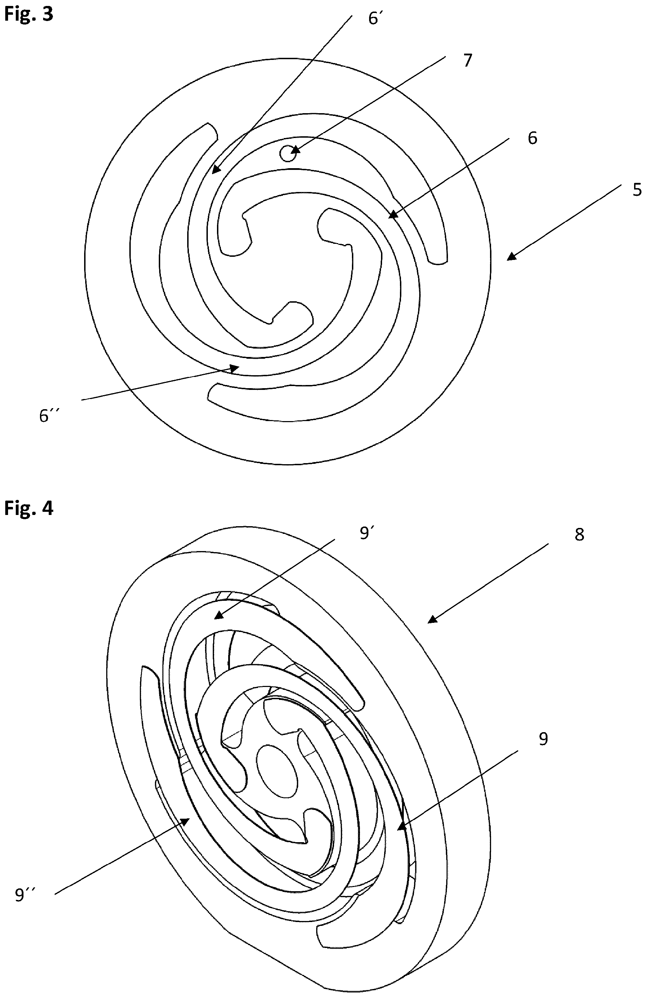

In Fig. 3 ist ein Decksubstrat 5 zu sehen, in dessen einer Oberfläche mittels Laser-Ablation Material rund um die Biegebalken-Geometrie herum entfernt wurde und mittels Zerspanen ein Loch eingefügt wurde. Die Biegebalken-Geometrie entspricht hier den drei langen, schmalen, gekrümmten Flächen 6,6', 6", deren Enden jeweils etwas breiter sind und die Kontaktflächen mit dem Rahmen und dem Prüfkörper sein werden. Das Loch 7 befindet sich zwischen den Biegebalken. Es gilt zu beachten, dass das zweite Decksubstrat entsprechend spiegelverkehrt präpariert wird.

In Fig. 4 ist der finale mechanische Resonator 8 zu sehen. Das Element ist dreizählig Drehsymmetrisch (abgesehen von der flachen Fläche auf der Unterseite auf der Außenseite des Rahmens). Vorder- und Rückseite des Resonators haben jeweils drei Biegebalken 9, 9', 9", die Rahmen und Prüfkörper monolithisch miteinander verbinden. In der Mitte der Vorderseite des Resonators ist die reflektierende Beschichtung aufgebracht. Das vorliegende Design ermöglicht, dass die Schwingung des Prüfkörpers trotz seiner kleinen Masse mit einer sehr geringen Eigenfrequenz stattfindet; die Bewegung des Prüfkörpers erfolgt aufgrund der Drehsymmetrie nur entlang der optischen Achse. Die Wahl des Materials, die Oberflächenbeschaffenheit der Biegebalken und die monolithische Eigenschaft des Resonators ermöglicht, dass der Gütefaktor sehr hoch ist.

### Beispiel

Als Ausgangs-Halbzeuge werden ein erstes Substrat á 50 mm Durchmesser x 6.35 mm Dicke sowie Decksubstrate á 50 mm Durchmesser x 1 mm Dicke eingesetzt. Diese Substrate sind bereits vorpoliert mit einer guten Ebenheit von besser als 400 nm (peak-to-valley, Prüfbereich 80% der Fläche). Als Material der Substrate wird sehr reines Kieselglas (Corning 7980 0F) verwendet. Anschließend folgt eine Endpolitur aller Substrate mit CMP auf jeweils beiden Seiten.

Aus der polierten Rundscheibe (erstes Substrat) wird mittels Ultraschallfräsen sowohl der Rahmen als auch der Prüfkörper hergestellt. Der resultierende Prüfkörper hat eine Masse von 3 g, der Rahmen eine Masse von 12 g und der gesamte Resonator eine Masse von 15 g. Der Resonator hat eine Eigenfrequenz von 15 Hz.

Auf den Prüfkörper wird mittels einer mechanischen Maske und dem Magnetron-Sputtern-Verfahren eine etwa 20 nm dicke Titan-Haftschicht und darauf eine 200 nm dicke Goldschicht als reflektierende Beschichtung abgeschieden.

Es folgt die Erzeugung einer Biegebalken-Geometrie auf den Decksubstraten mittels Laser-Ablation, wobei in den Bereichen außerhalb der Biegebalken-Geometrie auf den zwei Decksubstraten bereichsweise ein Materialabtrag um 10 µm erfolgt und ein die Biegebalken-Geometrie umschließender Graben mit der Tiefe 150 µm erzeugt wird. Anschließend wird mit einem Laser eine Markierung für das Loch erzeugt. Die Erzeugung der Löcher in den Decksubstraten erfolgt mittels Ultraschallfräsen, wobei der Durchmesser der Löcher 2,0 mm beträgt.

Die Verbindung von dem Rahmen und dem Prüfkörper mit den ersten Decksubstraten erfolgt mit plasmaaktiviertem Bonden. Dieses basiert auf folgenden Schritten:
- chemische Aktivierung der Oberflächen mit verdünntem Ammoniakwasser und Wasserstoffperoxid,
- DI-Wasser-Behandlung mit Megaschall,
- Spin-Trocknen,
- Plasmaaktivierung der Oberflächen mit N₂- und O₂-Plasma,
- DI-Wasser-Behandlung mit Megaschall,
- Spin-Trocknen
- Kontaktieren in einer Vorrichtung, die mechanische Anschläge benutzt zum Ausrichten,
- Temperaturbehandlung (250°C für 8h in Vakuum, kein externer mechanischer Druck).

Das Verbinden der Rückseite des resultierenden Elements mit dem zweiten Decksubstrat erfolgt mit den gleichen Schritten, es wird allerdings für die Ausrichtung in der Vorrichtung zusätzlich ein Prüfstift (Durchmesser 1,95 mm) verwendet.

Danach folgt das Befüllen der Löcher in den Substraten mit einem löslichen Kitt, welches zuerst flüssig ist, aber durch UV-Strahlung ausgehärtet wird. Das Kitt wird dabei so hart, dass das Bauteil für den Rückdünnungsprozess stabilisiert ist.

Der Rückdünnungsprozess erfolgt mittels konventionellem Schleifen und Polieren und einem finalen Polierschritt mittels CMP. Hierbei werden die Decksubstrate so weit abgedünnt, dass nur noch Material mit einer Dicke von 100 µm übrigbleibt. Im Anschluss wird das Kitt entfernt, indem das Bauteil in Aceton gelagert wird. Aufgrund der zuvor präparierten Gräben in den Decksubstraten löst sich nun jenes Material der Decksubstrate von den Resonatoren, das nicht Teil der Biegebalken ist. Es bleiben nur die (nun beidseitig polierten) Biegebalken übrig, deren Dicke 100 µm beträgt.

Eine abschließende Reinigung erfolgt durch Wischen mit einem Wattestäbchen mit Aceton und eine lokale Megaschall-Behandlung mit DI-Wasser.

## Patentansprüche

1. Verfahren zur Herstellung eines mechanischen Resonators (8) für Beschleunigungs- und Lagesensoren mit folgenden Schritten:
a) Bereitstellung von einem ersten Substrat und zwei Decksubstraten (5), jeweils enthaltend oder bestehend aus einem Material ausgewählt aus der Gruppe bestehend aus Glas, Glaskeramik, Saphir, Silicium, Siliciumcarbid oder Kombinationen hiervon,
b) Polieren des Substrats und der Decksubstrate (5), mittels chemisch-mechanischem Polieren, Pechpolieren oder Ionenstrahlpolieren,
c) Herstellung eines Prüfkörpers (4) und eines Rahmens (1) aus dem ersten Substrat mittels Zerspanen oder Laserbearbeitung,
d) Zumindest bereichsweise Beschichtung des Prüfkörpers (4) mit einer reflektierenden Beschichtung mittels physikalischer Gasphasenabscheidung (PVD) und/oder Atomlagenabscheidung (ALD),
e) Erzeugung einer Biegebalken-Geometrie (6,6', 6") auf den Decksubstraten (5) mittels Laser-Ablation und/oder chemischem Ätzen, wobei in den Bereichen außerhalb der Biegebalken-Geometrie (6,6', 6") auf den zwei Decksubstraten (5) bereichsweise ein Materialabtrag erfolgt und ein die Biegebalken-Geometrie (6,6', 6") umschließender Graben erzeugt wird,
f) Erzeugung von Löchern in den Decksubstraten (5) mittels Zerspanen oder Laserbearbeitung zur relativen Ausrichtung der Substrate zueinander,
g) Verbindung von dem Rahmen (1) und dem Prüfkörper (4) mit den Biegebalken (9, 9', 9") der Decksubstrate (5) mittels Wafer-Bonden zur Erzeugung eines monolithischen Resonators (8), wobei zunächst der Rahmen (1) und der Prüfkörper (4) mit dem ersten Decksubstrat und anschließend mit dem zweiten Decksubstrat verbunden wird,
h) Befüllen der Löcher in den Substraten mit einem chemisch löslichen Kitt und anschließendes Aushärten des Kitts,
i) Rückdünnung der Decksubstrate (5) mittels Schleifen oder Läppen und anschließendem Polieren,
j) Entfernung des Kitts durch Auflösung mit einer Säure, einer Lauge oder einem Lösungsmittel,
k) Lösen des Materials der Decksubstrate (5) vom Resonator (8), das nicht Teil der Biegebalken (9, 9', 9") ist, und
l) Reinigung des Resonators (8).

2. Verfahren nach Anspruch 1,
**dadurch gekennzeichnet, dass** das Glas ein Silikatglas, insbesondere ein Quarzglas, ist.

3. Verfahren nach Anspruch 1 oder 2,
**dadurch gekennzeichnet, dass** das Polieren in Schritt b) bis zu einer Oberflächenrauheit, gemessen als Sq-Rauheit auf einer Messfläche von 10 x 10 µm², von maximal 1 nm, bevorzugt von maximal 0,5 nm und besonders von 0,1 bis 0,3 nm, durchgeführt wird.

4. Verfahren nach einem der Ansprüche 1 bis 3,
**dadurch gekennzeichnet, dass** das Zerspanen durch Fräsen, insbesondere durch ultraschallgestütztes Fräsen, erfolgt.

5. Verfahren nach einem der Ansprüche 1 bis 4,
**dadurch gekennzeichnet, dass** die Beschichtung in Schritt d) mit einem Material ausgewählt aus der Gruppe bestehend aus Gold, Silber und Aluminium durchgeführt wird, wobei die Schichtdicke bevorzugt im Bereich von 50 bis 500 nm, besonders bevorzugt von 150 bis 200 nm, liegt oder dass die Beschichtung in Schritt d) eine dielektrische Schicht aus Silcium, Siliciumdioxid und/oder Tantalpentoxid ist, wobei die Schichtdicke bevorzugt im Bereich von 0,2 bis 5 µm, besonders bevorzugt von 1 bis 2 µm, liegt.

6. Verfahren nach einem der Ansprüche 1 bis 5,
**dadurch gekennzeichnet, dass** die Biegebalken (9, 9', 9") eine Dicke im Bereich von 40 bis 300 µm, bevorzugt von 80 bis 100 µm, aufweist, wobei der die Biegebalken-Geometrie umschließende Graben vorzugsweise eine Tiefe von d+20 bis d+150 µm, bevorzugt von d+30 bis d+70 µm, gemessen senkrecht zur Substratoberfläche, besitzt, wobei d die Dicke der Biegebalken (9, 9', 9") ist.

7. Verfahren nach einem der Ansprüche 1 bis 6,
**dadurch gekennzeichnet, dass** in Schritt e) der Materialabtrag von 5 bis 40 µm des Materials beträgt.

8. Verfahren nach einem der Ansprüche 1 bis 7,
**dadurch gekennzeichnet, dass** beim Wafer-Bonden in Schritt g) ein plasmaaktiviertes Bonden (PAB) mit einer anschließenden Temperaturbehandlung bei einer Temperatur im Bereich von 80 °C bis 450 °C, bevorzugt 200 bis 250 °C, erfolgt.

9. Verfahren nach einem der Ansprüche 1 bis 8,
**dadurch gekennzeichnet, dass** der Kitt in Schritt h) ausgewählt ist aus der Gruppe bestehend aus Epoxidharzen, Ketonformaldehydharzen, Polythiolen oder Kombinationen hiervon.

10. Verfahren nach einem der Ansprüche 1 bis 9,
**dadurch gekennzeichnet, dass** die Rückdünnung in Schritt i) mit einem Polierschritt abgeschlossen wird, so dass eine Oberflächenrauheit, gemessen als Sq-Rauheit auf einer Messfläche von 10 x 10 µm², von maximal 2 nm, bevorzugt von maximal 1 nm und insbesondere von 0,3 bis 0,7 nm, erzeugt wird.

11. Verfahren nach einem der Ansprüche 1 bis 10,
**dadurch gekennzeichnet, dass** die Auflösung des Kitts in Schritt j) mittels einer Säure, einer Lauge oder einem Lösungsmittel ausgewählt aus der Gruppe bestehend aus Aceton, Toluol, Methylenchlorid oder Mischungen hiervon erfolgt.

12. Verfahren nach einem der Ansprüche 1 bis 11,
**dadurch gekennzeichnet, dass** für die Reinigung des Resonators (8) in Schritt I) mindestens einer der folgenden Schritte durchgeführt wird:
• Lagerung in oder manuelle Reinigung mit einer Säure, einer Lauge oder einem Lösungsmittel ausgewählt aus der Gruppe bestehend aus Aceton, Toluol, Methylenchlorid oder Mischungen hiervon,
• Megaschallbehandlung des Resonators (8) mit deionisiertem Wasser.

13. Mechanischer Resonator (8) für Beschleunigungs- und Lagesensoren enthaltend einen von einem Rahmen (1) umgebenen Prüfkörper (4) aus einem ersten Substrat, wobei der Rahmen (1) und der Prüfkörper (4) front- und rückseitig mit einem Decksubstrat (5) in Form von Biegebalken (9, 9', 9") monolithisch verbunden sind und herstellbar nach dem Verfahren nach einem der Ansprüche 1 bis 12.

14. Mechanischer Resonator (8) nach Anspruch 13,
**dadurch gekennzeichnet**, das der Resonator (8) mindestens eine der folgenden Eigenschaften aufweist:
• eine Prüfkörper-Masse im Bereich von 1 bis 20 g, bevorzugt 2 bis 5 g,
• eine Eigenfrequenz bis 20 Hz, bevorzugt von 0,1 bis 15 Hz,
• einen Gütefaktor von mindestens 10000, bevorzugt von 100000 bis 1000000.

15. Verwendung des mechanischen Resonators (8) nach einem der Ansprüche 13 oder 14 in Gravitationswellendetektoren, Atom-Interferometern, EUV-Lithographieranlagen, Röntgenstrahl-Lithographieranlagen oder Navigationsgeräten.
